# FASCICULE DE BREVET EUROPEEN

(11) **EP 3 065 969 B1**
(45) Date de publication et mention de la délivrance du brevet: **15.06.2022**
(21) Numéro de dépôt: 14798757.2
(22) Date de dépôt: 06.11.2014
(51) Int. Cl.: B60L 53/16, B60L 53/66, H02J 7/34

(54) **DISPOSITIF DE CHARGE COMPACT POUR VEHICULE ELECTRIQUE**
KOMPAKTE LADEVORRICHTUNG FÜR EIN ELEKTROFAHRZEUG
COMPACT CHARGING DEVICE FOR ELECTRIC VEHICLE

(30) Priorité: 08.11.2013 FR 1360941
(43) Date de publication de la demande: 14.09.2016
(73) Titulaire: Intelligent Electronic Systems, 34130 Saint-Aunes (FR)
(72) Inventeur: BIAGINI, Eric, F-34470 Perols (FR); COSTE, François, F-34090 Montpellier (FR); JEAN, Guillaume, F-34300 Grau d'Agde (FR)
(74) Mandataire: Bandpay & Greuter
(86) Numéro de dépôt international: PCT/EP2014/073930
(87) Numéro de publication internationale: WO 2015/067695

(56) Documents cités:
- EP-A1- 2 690 749
- DE-A1-102012 205 972
- JP-A- 2009 194 958
- US-A1- 2011 055 037
- US-A1- 2011 169 447
- US-A1- 2012 025 759
- US-A1- 2012 081 073

## Description

### DOMAINE DE L'INVENTION

La présente invention concerne un dispositif de charge compact mobile et autonome pour véhicule électrique, ainsi qu'un procédé de charge reposant sur l'utilisation de celui-ci.

### ARRIERE-PLAN TECHNIQUE

De nombreux véhicules utilisent l'énergie électrique et sont équipés de batteries, par exemple des véhicules automobiles électriques, mais également des nacelles, des transpalettes...

L'alimentation des batteries de ces véhicules est effectuée en courant continu. A cet, effet, il est connu d'utiliser des dispositifs de charge permettant de convertir le courant alternatif issu du réseau de distribution électrique en courant continu approprié pour la charge de batterie.

On connaît deux types de dispositifs de charge : d'une part les chargeurs embarqués, qui sont montés directement sur les véhicules électriques ; et d'autre part les chargeurs externes, intégrés dans des bornes de charge fixes (par exemple en atelier, parking, garage, ou sur la voirie). Par ailleurs, il existe des chargeurs externes montés sur des chariots mobiles, généralement encombrants et de masse élevée.

Toutefois, les véhicules électriques présentent des risques de panne, par exemple du fait de l'autonomie limitée des batteries ou en cas de défaillance de chargeur embarqué ou de chargeur externe. En outre, les véhicules électriques peuvent ne pas être équipés de chargeur embarqué, en particulier dans le cas d'une utilisation où la charge de batterie peut être systématiquement réalisée avec un chargeur externe fixe dans une station de recharge par exemple.

Il existe donc un besoin d'améliorer la sécurité d'utilisation des véhicules électriques.

### RESUME DE L'INVENTION

L'invention concerne en premier lieu un dispositif de charge pour une batterie d'un véhicule électrique, ce dispositif de charge comprenant un boîtier renfermant des moyens de conversion du courant électrique, le boîtier étant pourvu d'un connecteur permettant de connecter directement le dispositif de charge au véhicule électrique de sorte à alimenter la batterie du véhicule électrique, et le dispositif de charge étant adapté à être alimenté par un courant d'entrée issu d'une source de courant, à convertir par les moyens de conversion du courant électrique le courant d'entrée en un courant de sortie continu, et à alimenter la batterie du véhicule électrique avec ledit courant de sortie continu.

Selon un mode de réalisation, le dispositif de charge est un dispositif portable, le boîtier étant de préférence pourvu d'une poignée.

Selon un mode de réalisation, le dispositif de charge est susceptible d'être connecté à la source de courant par un câble électrique.

Selon l'invention, le dispositif de charge comporte un mode de fonctionnement dans lequel la source de courant est une source de courant alternatif, et de préférence est le réseau d'alimentation électrique, et dans lequel le courant d'entrée est un courant alternatif.

Selon l'invention, le dispositif de charge comporte un mode de fonctionnement dans lequel la source de courant est une source de courant continu, de préférence une batterie externe, et dans lequel le courant d'entrée est un courant continu.

Selon un mode de réalisation, le dispositif de charge comprend un premier étage assurant la conversion du courant d'entrée en courant intermédiaire continu ainsi qu'un deuxième étage assurant la conversion du courant intermédiaire en courant de sortie.

Selon un mode de réalisation, le boîtier est pourvu d'un connecteur additionnel permettant de connecter directement le dispositif de charge au véhicule, de préférence de sorte à échanger des informations et instructions avec la batterie du véhicule électrique.

Selon un mode de réalisation, le dispositif de charge comporte un système de contrôle adapté à ajuster les paramètres de la conversion du courant d'entrée en courant de sortie et adapté à échanger des informations et instructions avec la batterie du véhicule électrique et/ou avec la source de courant.

Selon un mode de réalisation, le système de contrôle est pourvu de moyens d'alimentation auxiliaire, choisis de préférence parmi une batterie auxiliaire et un convertisseur auxiliaire adapté à recevoir un courant externe continu ou alternatif et à le convertir en courant continu d'alimentation du système de contrôle.

Selon un mode de réalisation, le véhicule électrique est une automobile électrique.

L'invention concerne également un procédé de charge d'une batterie de véhicule électrique, comprenant :
- la connexion d'un dispositif de charge tel que décrit ci-dessus à une source de courant ;
- la connexion dudit dispositif de charge au véhicule électrique en branchant le connecteur du dispositif de charge directement sur un connecteur correspondant du véhicule électrique ;
- l'alimentation du dispositif de charge par un courant d'entrée issu de la source de courant ;
- la conversion du courant d'entrée en courant de sortie continu par le dispositif de charge ;
- l'alimentation de la batterie du véhicule électrique par le courant de sortie.

Selon un mode de réalisation, le courant de sortie présente une tension de 200 à 550 V ; et/ou le courant de sortie présente une puissance inférieure ou égale à 20 kW, de préférence inférieure ou égale à 10 kW ou à 6 kW.

Selon un mode de réalisation, la conversion du courant d'entrée en courant de sortie comprend une première étape de conversion du courant d'entrée en courant intermédiaire continu, puis une deuxième étape de conversion du courant intermédiaire en courant de sortie.

Selon un mode de réalisation, le courant d'entrée est un courant alternatif.

Selon un mode de réalisation, le courant d'entrée est un courant continu.

Selon un mode de réalisation, le procédé comprend également la connexion du dispositif de charge au véhicule électrique en branchant le connecteur additionnel du dispositif de charge directement sur un connecteur du véhicule.

Selon un mode de réalisation, le procédé comprend l'ajustement de paramètres de la conversion du courant d'entrée en courant de sortie et l'échange d'informations et d'instructions entre le dispositif de charge et la batterie du véhicule électrique et/ou la source de courant ; le procédé comprenant de préférence l'envoi d'une instruction du dispositif de charge à la source de courant pour déclencher l'alimentation du dispositif de charge par la source de courant.

Selon un mode de réalisation, le procédé comprend une étape préliminaire d'alimentation du dispositif de charge par une source d'alimentation auxiliaire, de préférence choisie parmi une batterie auxiliaire et un courant externe continu ou alternatif.

Selon un mode de réalisation, le véhicule électrique est une automobile électrique.

La présente invention permet de surmonter les inconvénients de l'état de la technique. Elle permet plus particulièrement d'améliorer la sécurité d'utilisation des véhicules électriques.

Cela est accompli grâce à la mise au point d'un dispositif de charge compact, susceptible de constituer un véritable chargeur de secours permettant de recharger une batterie de véhicule électrique.

Les chargeurs externes traditionnels sont connectés aux véhicules par l'intermédiaire d'un câble électrique, pourvu à son extrémité d'un connecteur (ou prise) dédié au véhicule. L'invention propose d'intégrer un dispositif de charge dans un boîtier pourvu de connecteurs pour une connexion directe au véhicule. Ainsi, les manipulations nécessaires à la recharge de la batterie du véhicule sont facilitées, et le dispositif de charge peut être aisément rangé et transporté, notamment pour servir en tant que dispositif de charge de secours, par exemple en cas d'absence, ou de défaillance (ou d'indisponibilité) d'un chargeur embarqué ou d'un chargeur externe fixe.

Le chargeur proposé est ainsi intégré dans la prise de charge.

### BREVE DESCRIPTION DES FIGURES

La **figure 1** est une vue tridimensionnelle d'un dispositif de charge selon un mode de réalisation de l'invention.
La **figure 2** est un exemple de schéma électrique général des moyens de conversion du courant électrique du dispositif de charge selon l'invention.

### DESCRIPTION DE MODES DE REALISATION DE L'INVENTION

L'invention est maintenant décrite plus en détail et de façon non limitative dans la description qui suit.

L'invention propose un dispositif de charge mobile, amovible, compact et transportable, adapté pour alimenter une batterie de véhicule électrique. Par véhicule électrique on entend un appareil motorisé susceptible de déplacer ou transporter des personnes ou du matériel, dont le moteur est alimenté en énergie électrique par une batterie motrice (de préférence en tout, mais éventuellement en partie seulement dans le cas d'un véhicule électrique hybride).

Le véhicule électrique est de préférence une automobile électrique. Alternativement, il peut s'agir par exemple d'un engin de manutention tel qu'un chariot élévateur, une nacelle élévatrice, un transpalette.

Par « *portable »* ou « *transportable* » ou entend que le dispositif peut être soulevé et déplacé par un adulte seul en bonne santé, sans l'aide d'un quelconque appareillage spécialisé. Le dispositif n'est pas intégré de façon permanente sur une structure fixe telle qu'une borne de charge pour véhicule électrique. Le dispositif n'est pas non plus intégré de façon permanente au véhicule électrique, c'est-à-dire qu'il ne s'agit pas d'un chargeur embarqué.

A titre d'illustration, le dispositif peut avoir une masse inférieure ou égale à 20 kg, de préférence inférieure ou égale à 15 kg, ou à 10 kg, ou à 7,5 kg, ou à 5 kg.

A titre d'illustration, le dispositif (c'est-à-dire son boîtier décrit ci-dessous) peut présenter une dimension maximale inférieure ou égale à 60 cm, de préférence inférieure ou égale à 50 cm, ou à 40 cm, ou à 30 cm.

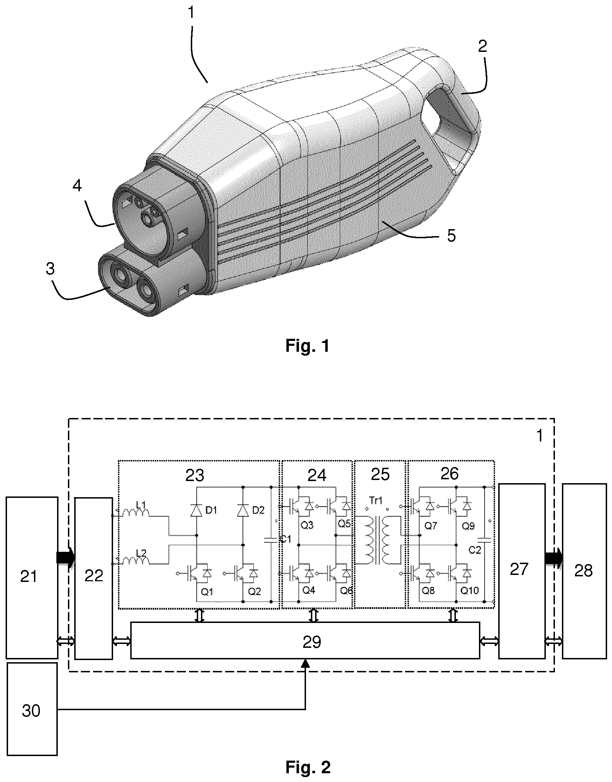

La **figure 1** fournit un exemple de dispositif de charge 1 selon l'invention. Celui-ci comprend un boîtier 5 renfermant des moyens de conversion du courant électrique, et optionnellement une poignée 2 facilitant sa préhension.

Un connecteur 3 et un connecteur additionnel 4 (qui est optionnel) sont prévus sur une face du boîtier 5 (de préférence opposée à la poignée 2) ; tous deux sont adaptés pour être connectés directement à des connecteurs associés (ou prises) du véhicule électrique. Par « directement », on entend sans intermédiaire et notamment sans câble électrique intermédiaire.

Le connecteur 3 est adapté pour l'alimentation de la batterie du véhicule. Selon un mode de réalisation, le connecteur 3 permet une connexion directe aux contacts DC de la batterie du véhicule, qui sont en principe utilisés par les systèmes de charge rapide ou semi-rapide externes.

Le connecteur additionnel 4 est adapté par exemple pour relier le dispositif de charge 1 à la terre et/ou pour échanger des informations ou signaux de contrôle avec le véhicule électrique.

Le dispositif de charge 1 comprend par ailleurs des moyens de connexion à une source de courant (non représentés ici), par exemple ménagés dans la poignée 2 ou à côté de celle-ci.

Ces moyens de connexion peuvent être par exemple un autre connecteur ménagé sur le boîtier 5, et adapté à être connecté à un câble électrique permettant de relier le dispositif de charge 1 à la source de courant. Alternativement, ces moyens de connexion peuvent eux-mêmes comprendre un câble électrique sortant du boîtier 5 et pourvu à son extrémité libre d'un connecteur, permettant de relier le dispositif de charge 1 à la source de courant.

Avantageusement, les moyens de connexion à la source de courant permettent l'alimentation du dispositif de charge 1 mais également de préférence une liaison à la terre et/ou un échange d'informations ou signaux de contrôle avec la source de courant.

Le dispositif de charge 1 selon l'invention se connecte au véhicule en lieu et place d'un câble issu d'une borne de recharge fixe, mais il procède à la charge avec une puissance de préférence limitée, compatible avec sa fonction de chargeur de secours ou d'appoint.

Selon un premier mode de fonctionnement, la source de courant est une source de courant alternatif, par exemple le réseau de distribution électrique général. Elle alimente le dispositif de charge 1 en courant d'entrée alternatif, de préférence un courant monophasé (et alternativement éventuellement un courant multiphasé, notamment triphasé). Si le courant d'entrée est monophasé, il peut avoir par exemple une tension de 85 à 265 V (par exemple 110 ou 230 V).

Selon un deuxième mode de fonctionnement, la source de courant peut être une source de courant continu, par exemple une batterie externe fixe, ou une batterie externe sur un chariot mobile, ou une batterie externe embarquée sur un engin de dépannage.

Le courant d'entrée délivré, dans ce deuxième mode de fonctionnement, peut avoir par exemple une tension de 20 à 1500 V, de préférence de 50 à 550 V, de manière plus particulièrement préférée de 200 à 550 V, et tout particulièrement de 300 à 500 V.

Selon un mode de réalisation, la batterie externe peut être une batterie d'un autre véhicule électrique. Ce mode de fonctionnement correspond alors à une situation de charge de secours de véhicule à véhicule, utile pour un véhicule qui n'est plus en mesure d'atteindre une station de charge.

Selon l'invention, le dispositif de charge est adapté à fonctionner à la fois selon le premier mode et selon le deuxième mode de fonctionnement.

Dans chaque mode de fonctionnement, le courant de sortie délivré est un courant continu approprié pour la charge d'une batterie de véhicule électrique, c'est-à-dire ayant une tension de 20 à 1500 V, de préférence de 50 à 550 V, de manière plus particulièrement préférée de 200 à 550 V, et tout particulièrement de 300 à 500 V.

Dans le premier mode de fonctionnement, le dispositif de charge 1 opère une conversion AC-DC. Dans le deuxième mode de fonctionnement, il opère une conversion DC-DC.

Généralement, la tension du courant de sortie est différente de la tension du courant d'entrée, même lorsque la source de courant est une source de courant continu. Cela est dû notamment au fait que la tension à laquelle une batterie de véhicule électrique se charge (ou se décharge) varie selon son niveau de charge.

Ainsi, le dispositif de charge 1 peut agir selon les cas comme un élévateur ou un abaisseur de tension.

Selon un mode de réalisation, le dispositif de charge 1 comprend une isolation galvanique entre l'entrée et la sortie.

Selon un mode de réalisation alternatif, le dispositif de charge 1 est dépourvu d'isolation galvanique entre l'entrée et la sortie.

Selon un mode de réalisation, le dispositif de charge 1 assure une conversion du courant d'entrée en courant intermédiaire (continu) puis une conversion du courant intermédiaire en courant de sortie. De préférence la conversion du courant intermédiaire en courant de sortie est effectuée au moyen d'un transformateur muni de part et d'autre de modules de conversion à découpage.

De préférence, le dispositif de charge 1 comprend des moyens d'échange d'informations et d'instructions avec la source de courant (ou avec les différentes sources de courant possibles) et avec le véhicule électrique (par exemple avec la batterie de celui-ci) ; ainsi que des moyens d'ajustement des paramètres de la conversion du courant d'entrée en courant de sortie, notamment en fonction d'informations reçues de la source de courant et/ou d'informations reçus de la batterie du véhicule électrique à charger et/ou d'instructions données par l'utilisateur. L'ensemble de ces moyens permet une gestion complète du protocole de charge.

L'interface du dispositif de charge 1 peut ainsi être compatible avec la norme EN61851, en modes 1 et/ou 2 et/ou 3, et/ou compatible avec la norme Chademo et/ou compatible avec la norme ISO 15118 et/ou compatible avec la norme J1772 et/ou toute autre norme définissant un protocole et un système de communication entre le dispositif de charge, la source de courant et le véhicule.

Selon un mode de réalisation, le dispositif de charge 1 fonctionne selon l'une ou l'autre norme selon le véhicule à charger et la source de courant.

Les moyens d'échange d'informations et d'instructions avec la source de courant peuvent notamment être aptes à déclencher la fourniture de courant d'entrée par la source de courant, dans le cadre d'un fonctionnement sécurisé.

Les moyens d'échange d'informations et d'instructions avec la source de courant peuvent également être aptes à éviter une décharge excessive de celle-ci, lorsqu'il s'agit d'une batterie externe (deuxième mode de fonctionnement).

Selon un mode de réalisation, le véhicule électrique dont la batterie est chargée au moyen du dispositif de charge selon l'invention est un véhicule électrique dépourvu de chargeur embarqué (c'est-à-dire de dispositif assurant une conversion de courant électrique alternatif en courant continu propre à alimenter la batterie).

Selon un mode de réalisation, le dispositif de charge 1 comporte des moyens d'alimentation auxiliaire. Ces moyens d'alimentation sont notamment utiles pour permettre l'échange d'informations et d'instructions avec la source de courant et avec la batterie à charger dans une phase préliminaire, permettant de déclencher la fourniture de courant par la source de courant.

Ces moyens d'alimentation auxiliaire peuvent comprendre une batterie auxiliaire (ou une ou plusieurs piles électriques) dans le dispositif de charge 1 lui-même. Alternativement, on peut prévoir un convertisseur auxiliaire adapté à être alimenté en courant externe et à le convertir en courant continu adapté pour le fonctionnement du dispositif de charge 1 notamment pendant la phase préliminaire susmentionnée.

On peut notamment prévoir d'alimenter ce convertisseur auxiliaire avec un courant alternatif issu du réseau de distribution électrique. On peut également prévoir de l'alimenter avec une batterie externe, ou encore avec le réseau électrique de bord qui alimente les équipements du véhicule électrique.

Ces moyens d'alimentation auxiliaire sont particulièrement utiles lorsque ni la source ni le véhicule destiné à être chargé ne présente de source d'alimentation disponible au niveau de son connecteur de charge. En effet, pour des raisons de sécurité, l'accès direct à des tensions dangereuses au niveau des connecteurs de charge n'est pas autorisé sans que soit avérée une connexion adaptée, et sans que par un moyen sûr de contrôle cette connexion soit identifiée par le véhicule et son système de supervision comme étant une connexion à une source adaptée.

Cette identification est effectuée par un échange de signaux entre le véhicule et la source. Il est donc nécessaire de disposer d'une alimentation préalable, pour être en capacité d'établir l'échange de signaux afin de déclencher le raccordement des contacts électriques permettant d'alimenter la charge du véhicule.

En faisant référence à la **figure 2****,** un circuit électrique possible pour les moyens de conversion du courant électrique du dispositif de charge 1 selon l'invention est décrit plus en détail.

Dans cet exemple, le dispositif de charge 1 comprend une interface d'entrée 22 qui échange des informations et instructions avec une source de courant 21 et peut être alimentée en courant électrique par cette source de courant 21.

Le dispositif de charge 1 comprend également une interface de sortie 27 qui échange des informations et instructions avec une batterie de véhicule électrique 28 et peut alimenter celle-ci en courant électrique.

Le dispositif de charge 1 comporte en outre un premier module 23, un deuxième module 24 et un troisième module 26. Entre le deuxième module 24 et le troisième module 26 est prévu un transformateur 25.

Le premier module 23 constitue le premier étage du convertisseur (assurant la conversion courant d'entrée / courant intermédiaire) et l'ensemble formé du deuxième module 24, du transformateur 25 et du troisième module 26 constitue le deuxième étage du convertisseur (assurant la conversion courant intermédiaire / courant de sortie).

Le premier module 23 est connecté à l'interface d'entrée 22. Il comprend un ensemble d'inductances L1, L2, de diodes D1, D2, d'éléments de commutation Q1, Q2 et un condensateur C1. Ce premier module 23 est capable de convertir un courant alternatif d'entrée (issu de la source de courant 21) en courant continu de tension U1 aux bornes du condensateur C1 (courant intermédiaire). Ce premier module 23 réalise aussi une fonction de correction de facteur de puissance. Il est également susceptible de fonctionner en conversion DC-DC lorsque la source de courant 21 fournit un courant d'entrée continu.

Le deuxième module 24 est un hacheur en pont, comprenant des éléments de commutation Q3, Q4, Q5, Q6. Il convertit le courant continu de tension U1 en courant alternatif alimentant le transformateur 25. Il présente de préférence une structure résonnante ou quasi-résonnante.

Le transformateur 25 assure l'isolation galvanique, qui est imposée par les normes de sécurité pour toute charge à partir du réseau de distribution électrique.

Il fournit un courant alternatif en entrée du troisième module 26, qui est un redresseur, comprenant des éléments de commutation Q7, Q8, Q9, Q10 et un condensateur C2. Ce redresseur fournit un courant continu de tension U2 aux bornes du condensateur C2 et ainsi à l'interface de sortie 27 (courant de sortie).

Un système de contrôle 29 reçoit des informations et fournit des instructions à l'interface d'entrée 22, à l'interface de sortie 27 et au premier module 23, deuxième module 24 et troisième module 26.

Ce système de contrôle 29 est alimenté en énergie par des moyens d'alimentation auxiliaire 30 tels que décrits ci-dessus. Les moyens d'alimentation auxiliaire 30 peuvent être compris dans le dispositif de charge 1 ou être extérieurs à celui-ci, comme cela est représenté sur la figure.

Dans un exemple ne faisant pas partie de la présente invention où le dispositif de charge 1 est utilisé seulement pour le deuxième mode de fonctionnement, il est possible d'utiliser une structure simplifiée assurant seulement une conversion DC-DC, et par exemple dépourvue de transformateur 25, si une isolation galvanique n'est pas requise pour des raisons de sécurité.

Une autre structure (simplifiée) possible pouvant être utilisée à la place de la structure décrite ci-dessus comporterait un module de conversion unique doté d'une commande complexe.

## Revendications

1. Dispositif de charge (1) pour une batterie d'un véhicule électrique (28), ce dispositif de charge (1) comprenant un boîtier (5) renfermant des moyens de conversion du courant électrique, le boîtier (5) étant pourvu d'un connecteur (3) permettant de connecter directement, sans câble électrique intermédiaire, le dispositif de charge (1) au véhicule électrique de sorte à alimenter la batterie du véhicule électrique, et le dispositif de charge (1) étant adapté à être alimenté par un courant d'entrée issu d'une source de courant (21), à convertir par les moyens de conversion du courant électrique le courant d'entrée en un courant de sortie continu, et à alimenter la batterie du véhicule électrique (28) avec ledit courant de sortie continu ; le dispositif de charge (1) comportant un mode de fonctionnement dans lequel la source de courant (21) est une source de courant alternatif et le courant d'entrée est un courant alternatif, et **caractérisé en ce que** le dispositif comporte un mode de fonctionnement dans lequel la source de courant (21) est une source de courant continu et le courant d'entrée est un courant continu.

2. Dispositif de charge (1) selon la revendication 1, qui est un dispositif portable, le boîtier (5) étant de préférence pourvu d'une poignée (2) et/ou qui est susceptible d'être connecté à la source de courant (21) par un câble électrique.

3. Dispositif de charge (1) selon l'une des revendications 1 à 2, dans lequel la source de courant alternatif est le réseau d'alimentation électrique ; et/ou dans lequel la source de courant continu est une batterie externe.

4. Dispositif de charge (1) selon l'une des revendications 1 à 3, dans lequel le dispositif de charge (1) comprend un premier étage (23) assurant la conversion du courant d'entrée en courant intermédiaire continu ainsi qu'un deuxième étage (24, 25, 26) assurant la conversion du courant intermédiaire en courant de sortie.

5. Dispositif de charge (1) selon l'une des revendications 1 à 4, dans lequel le boîtier (5) est pourvu d'un connecteur additionnel (4) permettant de connecter directement le dispositif de charge (1) au véhicule, de préférence de sorte à échanger des informations et instructions avec la batterie du véhicule électrique (28).

6. Dispositif de charge (1) selon l'une des revendications 1 à 5, comportant un système de contrôle (29) adapté à ajuster les paramètres de la conversion du courant d'entrée en courant de sortie et adapté à échanger des informations et instructions avec la batterie du véhicule électrique (28) et/ou avec la source de courant (21); et dans lequel de préférence le système de contrôle (29) est pourvu de moyens d'alimentation auxiliaire (30), choisis de préférence parmi une batterie auxiliaire et un convertisseur auxiliaire adapté à recevoir un courant externe continu ou alternatif et à le convertir en courant continu d'alimentation du système de contrôle (29).

7. Dispositif de charge (1) selon l'une des revendications 1 à 6, dans lequel le véhicule électrique est une automobile électrique.

8. Procédé de charge d'une batterie de véhicule électrique (28), comprenant :
- la connexion d'un dispositif de charge (1) selon l'une des revendications 1 à 7 à une source de courant (21);
- la connexion dudit dispositif de charge (1) au véhicule électrique en branchant le connecteur (3) du dispositif de charge (1) directement sur un connecteur correspondant du véhicule électrique ;
- l'alimentation du dispositif de charge (1) par un courant d'entrée issu de la source de courant (21) ;
- la conversion du courant d'entrée en courant de sortie continu par le dispositif de charge (1) ;
- l'alimentation de la batterie du véhicule électrique (28) par le courant de sortie.

9. Procédé selon la revendication 8, dans lequel le courant de sortie présente une tension de 200 à 550 V ; et/ou dans lequel le courant de sortie présente une puissance inférieure ou égale à 20 kW, de préférence inférieure ou égale à 6 kW.

10. Procédé selon la revendication 8 ou 9, dans lequel la conversion du courant d'entrée en courant de sortie comprend une première étape de conversion du courant d'entrée en courant intermédiaire continu, puis une deuxième étape de conversion du courant intermédiaire en courant de sortie.

11. Procédé selon l'une des revendications 8 à 10, comprenant également la connexion du dispositif de charge (1) au véhicule électrique en branchant le connecteur additionnel (4) du dispositif de charge (1) directement sur un connecteur du véhicule.

12. Procédé selon l'une des revendications 8 à 11, comprenant l'ajustement de paramètres de la conversion du courant d'entrée en courant de sortie et l'échange d'informations et d'instructions entre le dispositif de charge (1) et la batterie du véhicule électrique (28) et/ou la source de courant (21); le procédé comprenant de préférence l'envoi d'une instruction du dispositif de charge (1) à la source de courant (21) pour déclencher l'alimentation du dispositif de charge (1) par la source de courant (21).

13. Procédé selon l'une des revendications 8 à 12, comprenant une étape préliminaire d'alimentation du dispositif de charge (1) par une source d'alimentation auxiliaire (30), de préférence choisie parmi une batterie auxiliaire et un courant externe continu ou alternatif.

14. Procédé selon l'une des revendications 8 à 13, dans lequel le véhicule électrique est une automobile électrique.

## Patentansprüche

1. Ladevorrichtung (1) für eine Batterie eines Elektrofahrzeugs (28), wobei diese Ladevorrichtung (1) ein Gehäuse (5) umfasst, das Mittel zum Umrichten des elektrischen Stroms einschließt, wobei das Gehäuse (5) mit einem Verbinder (3) ausgestattet ist, der ermöglicht, direkt, ohne elektrisches Zwischenkabel, die Ladevorrichtung (1) mit dem Elektrofahrzeug zu verbinden, um die Batterie des Elektrofahrzeugs zu versorgen, und wobei die Ladevorrichtung (1) ausgelegt ist, um mit einem Eingangsstrom versorgt zu werden, der aus einer Stromquelle (21) stammt, um durch die Mittel zum Umrichten des elektrischen Stroms den Eingangsstrom in einen Ausgangsgleichstrom umzurichten, und die Batterie des Elektrofahrzeugs (28) mit dem Ausgangsgleichstrom zu versorgen; wobei die Ladevorrichtung (1) einen Funktionsmodus umfasst, in dem die Stromquelle (21) eine Wechselstromquelle ist und der Eingangsstrom ein Wechselstrom ist, und **dadurch gekennzeichnet, dass** die Vorrichtung einen Funktionsmodus umfasst, wobei die Stromquelle (21) eine Gleichstromquelle ist und der Eingangsstrom ein Gleichstrom ist.

2. Ladevorrichtung (1) nach Anspruch 1, die eine tragbare Vorrichtung ist, wobei das Gehäuse (5) vorzugsweise mit einem Griff (2) ausgestattet ist, und/oder mit der Stromquelle (21) durch ein elektrisches Kabel verbunden werden kann.

3. Ladevorrichtung (1) nach einem der Ansprüche 1 bis 2, wobei die Wechselstromquelle das elektrische Versorgungsnetz ist, und/oder wobei die Gleichstromquelle eine externe Batterie ist.

4. Ladevorrichtung (1) nach einem der Ansprüche 1 bis 3, wobei die Ladevorrichtung (1) einen ersten Schritt (23) umfasst, der das Umrichten des Eingangsstroms in Zwischengleichstrom sicherstellt, sowie einen zweiten Schritt (24, 25, 26), der das Umrichten des Zwischenstroms in Ausgangsstrom sicherstellt.

5. Ladevorrichtung (1) nach einem der Ansprüche 1 bis 4, wobei das Gehäuse (5) mit einem zusätzlichen Verbinder (4) ausgestattet ist, der ermöglicht, direkt die Ladevorrichtung (1) mit dem Fahrzeug zu verbinden, vorzugsweise derart, um Informationen und Anweisungen mit der Batterie des Elektrofahrzeugs (28) auszutauschen.

6. Ladevorrichtung (1) nach einem der Ansprüche 1 bis 5, umfassend ein Steuersystem (29), das ausgelegt ist, um die Parameter der Umrichtung des Eingangsstroms in Ausgangsstrom einzustellen, und ausgelegt ist, um Informationen und Anweisungen mit der Batterie des Elektrofahrzeugs (28) und/oder mit der Stromquelle (21) auszutauschen; und wobei vorzugsweise das Steuersystem (29) mit Hilfsversorgungsmitteln (30) ausgestattet ist, ausgewählt vorzugsweise aus einer Hilfsbatterie und einem Hilfsumrichter, der ausgelegt ist, um einen externen Gleich- oder Wechselstrom aufzunehmen und ihn in Gleichstrom zur Versorgung des Steuersystems (29) umzuwandeln.

7. Ladevorrichtung (1) nach einem der Ansprüche 1 bis 6, wobei das Elektrofahrzeug ein elektrisches Kraftfahrzeug ist.

8. Verfahren zum Laden einer Batterie eines Elektrofahrzeugs (28), umfassend:
- Verbinden einer Ladevorrichtung (1) nach einem der Ansprüche 1 bis 7 mit einer Stromquelle (21);
- Verbinden der Ladevorrichtung (1) mit dem Elektrofahrzeug durch Anschließen des Verbinders (3) der Ladevorrichtung (1) direkt auf einem Verbinder, der dem Elektrofahrzeug entspricht;
- Versorgen der Ladevorrichtung (1) mit einem Eingangsstrom, der aus der Stromquelle (21) stammt,
- Umrichten des Eingangsstroms in Ausgangsgleichstrom durch die Ladevorrichtung (1);
- Versorgen der Batterie des Elektrofahrzeugs (28) durch den Ausgangsstrom.

9. Verfahren nach Anspruch 8, wobei der Ausgangsstrom eine Spannung von 200 bis 550 V darstellt; und/oder wobei der Ausgangsstrom eine Leistung von weniger als oder gleich wie 20 kW, vorzugsweise weniger als oder gleich wie 6 kW darstellt.

10. Verfahren nach Anspruch 8 oder 9, wobei das Umrichten des Eingangsstroms in Ausgangsstrom einen ersten Schritt des Umrichtens des Eingangsstroms in Zwischengleichstrom, dann einen zweiten Schritt des Umrichtens des Zwischenstroms in Ausgangsstrom umfasst.

11. Verfahren nach einem der Ansprüche 8 bis 10, ebenfalls umfassend das Verbinden der Ladevorrichtung (1) mit dem Elektrofahrzeug durch Anschließen des zusätzlichen Verbinders (4) der Ladevorrichtung (1) direkt auf einem Verbinder des Fahrzeugs.

12. Verfahren nach einem der Ansprüche 8 bis 11, umfassend das Anpassen von Parametern der Umrichtung des Eingangsstroms in Ausgangsstrom und das Austauschen von Informationen und Anweisungen zwischen der Ladevorrichtung (1) und der Batterie des Elektrofahrzeugs (28) und/oder der Stromquelle (21); wobei das Verfahren vorzugsweise das Senden einer Anweisung der Ladevorrichtung (1) an die Stromquelle (21) umfasst, um die Versorgung der Ladevorrichtung (1) durch die Stromquelle (21) auszulösen.

13. Verfahren nach einem der Ansprüche 8 bis 12, umfassend einen vorherigen Schritt des Versorgens der Ladevorrichtung (1) durch eine Hilfsversorgungsquelle (30), vorzugsweise ausgewählt aus einer Hilfsbatterie und einem externen Gleich- oder Wechselstrom.

14. Vorrichtung nach einem der Ansprüche 8 bis 13, wobei das Elektrofahrzeug ein elektrisches Kraftfahrzeug ist.

## Claims

1. A charging device (1) for an electric vehicle battery (28), the charging device (1) comprising a casing (5) containing electric current conversion means, the casing (5) being provided with a connector (3) making it possible to connect the charging device (1) directly to the electric vehicle, without intermediate power cable, so as to power the battery of the electric vehicle, and the charging device (1) being able to be powered by an input current from a power source (21), to convert, via the electric current conversion means, the input current into a direct output current, and to power the battery of the electric vehicle (28) with said direct output current; the charging device (1) including an operating mode in which the power source (21) is an alternating power source and the input current is an alternating current, and **characterized in that** the device includes an operating mode in which the power source (21) is a direct power source and the input current is a direct current.

2. The charging device (1) according to claim 1, which is a portable device, the casing (5) preferably being provided with a handle (2); and/or which is capable of being connected to the power source (21) by a power cable.

3. The charging device (1) according to one of claims 1 to 2, wherein the alternating power source is the electricity supply grid; and/or wherein the direct power source is an external battery.

4. The charging device (1) according to one of claims 1 to 3, wherein the charging device (1) comprises a first stage (23) converting the input current into a direct intermediate current as well as a second stage (24, 25, 26) converting the intermediate current into output current.

5. The charging device (1) according to one of claims 1 to 4, wherein the casing (5) is provided with an additional connector (4) making it possible to connect the charging device (1) directly to the vehicle, preferably so as to exchange information and instructions with the battery of the electric vehicle (28).

6. The charging device (1) according to one of claims 1 to 5, including a control system (29) adapted for adjusting the parameters of the conversion of the input current into output current and adapted for exchanging information and instructions with the battery of the electric vehicle (28) and/or with the power source (21); and wherein, preferably, the control system (29) is provided with auxiliary power supply means (30), preferably chosen from an auxiliary battery and an auxiliary converter adapted for receiving a direct or alternating external current and converting it into a direct current supplying the control system (29).

7. The charging device (1) according to one of claims 1 to 6, wherein the electric vehicle is an electric automobile.

8. A method for charging an electric vehicle battery (28), comprising:
- connecting a charging device (1) according to one of claims 1 to 7 to a power source (21);
- connecting said charging device (1) to the electric vehicle by connecting the connector (3) of the charging device (1) directly on a corresponding connector of the electric vehicle;
- supplying the charging device (1) with an input current from the power source (21);
- converting the input current into a direct output current with the charging device (1);
- supplying the battery of the electric vehicle (28) with the output current.

9. The method according to claim 8, wherein the output current has a voltage of 200 to 550 V; and/or wherein the output current has a power less than or equal to 20 kW, preferably less than or equal to 6 kW.

10. The method according to claim 8 or 9, wherein the conversion of the input current into output current comprises a first step of converting the input current into a direct intermediate current, then a second step of converting the intermediate current into output current.

11. The method according to one of claims 8 to 10, also comprising connecting the charging device (1) to the electric vehicle by connecting the additional connector (4) of the charging device (1) directly on a connector of the electric vehicle.

12. The method according to one of claims 8 to 11, comprising adjusting parameters for the conversion of the input current into output current and exchanging information and instructions between the charging device (1) and the battery of the electric vehicle (28) and/or the power source (21); the method preferably comprising sending an instruction from the charging device (1) to the power source (21) to trigger the supply of power to the charging device (1) from the power source (21).

13. The method according to one of claims 8 to 12, comprising a preliminary step of supplying power to the charging device (1) via an auxiliary power supply source (30), preferably chosen from an auxiliary battery and a direct or alternating external current.

14. The method according to one of claims 8 to 13, wherein the electric vehicle is an electric automobile.
